Europäisches Patentamt

European Patent Office

Office européen des brevets

(19)

(11) Publication number: 0 047 593
B1

# (12) EUROPEAN PATENT SPECIFICATION

(45) Date of publication of patent specification: 29.10.86

(51) Int. Cl.⁴: F 16 H 55/22, B 22 F 5/08

(21) Application number: 81303734.8

(22) Date of filing: 17.08.81

(54) Wormwheel gears.

(30) Priority: 29.08.80 GB 8028068

(43) Date of publication of application:
17.03.82 Bulletin 82/11

(45) Publication of the grant of the patent:
29.10.86 Bulletin 86/44

(84) Designated Contracting States:
AT BE CH DE FR GB IT LI LU NL SE

(56) References cited:
AT-B- 204 850
CH-A- 544 240
DE-C- 544 445
DE-C- 883 380
FR-A-1 131 237
GB-A-1 168 213
GB-A-2 057 627
US-A-2 812 668
US-A-3 535 948

(73) Proprietor: Mastergear Company Limited
Bone Lane Newbury
Berkshire RG14 5SL (GB)

(72) Inventor: Norton, Colin Frank
Bank Tree House Hurstbourne Tarrant
Nr. Andover Hampshire (GB)
Inventor: Harvey, Raymond Godfrey Ashley
18 Westwood Road
Newbury Berkshire (GB)

(74) Representative: Sheader, Brian N. et al
ERIC POTTER & CLARKSON 27 South Street
Reading Berkshire, RG1 4QU (GB)

Courier Press, Leamington Spa, England.

**Description**

The present invention relates to improvements in or relating to worm and wormwheels. The worm and wormwheel of the present invention is particularly, but not exclusively, suitable for use in valve actuators.

It is an object of the invention to provide a worm and wormwheel wherein the wormwheel is provided with a toothing formation which allows the wormwheel to be moulded, rather than cut using conventional machining techniques, thus permitting mass production. Although the invention is not so limited it is particularly applicable to moulded wormwheels which are formed using metal powder which is compressed in a mould to form a so-called 'green compact' which is then removed from the mould and thereafter sintered. As will be appreciated, a problem in such a process is that the green compact is liable to damage when being removed from the mould. Conventional wormwheel gear toothing has a pitch diameter which decreases over a first axial portion extending from one transverse face of the gear to a minimum pitch diameter and then increases over a second axial portion extending to the other transverse face of the wormwheel. Obviously, such a toothing configuration cannot be removed from a mould by simple axial relative movement between the mould and the wormwheel moulded therein.

US—A—2 812 668 discloses a wormwheel where the pitch diameter is decreasing over a first axial portion of the wheel and non-increasing over a second axial portion thereof.

According to the present invention there is provided a worm and wormwheel, the wormwheel being of moulded sintered metal and having teeth disposed about at least a portion of its periphery, the teeth having a decreasing pitch diameter over a first axial portion thereof extending from one transverse face of the wheel and having a non-increasing pitch diameter over a second axial portion thereof extending to the other transverse face of the wheel wherein the second axial portion of each tooth is straight with no helical angle and the worm is of a harder material than the wormwheel so that in use the straight portions of the teeth will wear to increase the contact between the teeth of the worm and wormwheel.

The provision of toothing with a pitch diameter which varies over the axial extent of the toothing as defined above enables the toothing configuration to be removed by simple axial relative movement between the mould and the wormwheel moulded therein.

It will be understood that the toothing may be helical over its first axial portion and still be removable from a mould by simple axial relative movement, i.e. without the need for rotating the wormwheel about its axis relative to the mould during removal. However, it is essential for the toothing over the second axial portion to be both of non-increasing pitch diameter and straight for removal from the mould by simple axial relative movement. As will be appreciated, the provision of a toothing configuration which can be removed from a mould by simple axial relative movement makes practicable the use of metal powder technology for the production of wormwheels, since the problem of damaging the green compact during its removal from the mould is greatly reduced.

In order that the invention may be well understood an embodiment thereof will now be described, by way of example only, with reference to the accompanying drawings in which:

Figure 1 is a longitudinal section of a wormwheel gear suitable for use in a valve actuator;

Figure 2 is a plan view of the wormwheel gear of Figure 1;

Figure 3 shows a diagrammatic illustration of a method of cutting a wormwheel gear;

Figure 4 shows a plan view of a casing half of a valve actuator containing a worm and wormwheel gear assembly; and

Figure 5 is a section on the line V—V of Figure 4.

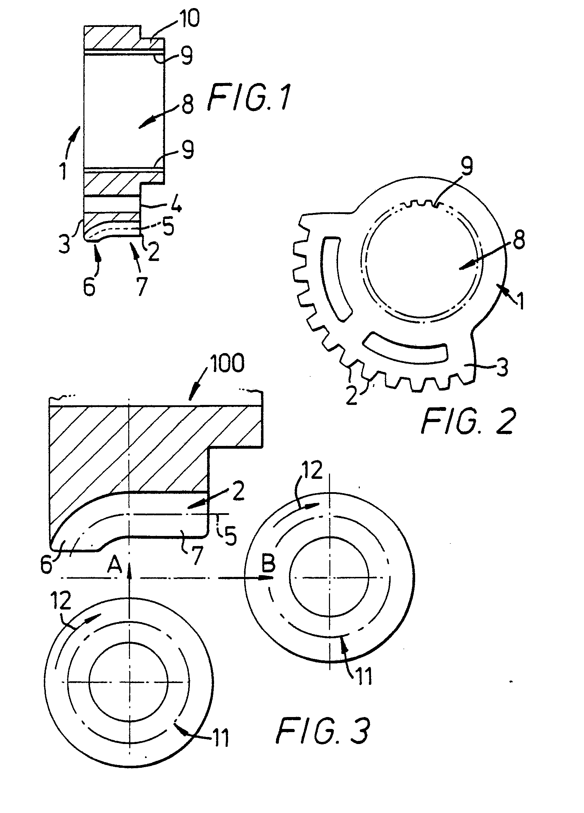

A moulded wormwheel gear 1 has toothing 2 over at least a portion of its periphery. As the wormwheel gear illustrated is for use in a valve actuator for a butterfly valve in which it is only necessary for the valve stem to be rotated through a quarter-turn between the open and closed positions, the toothing is only provided over just over a quarter of the periphery as seen in Figure 2.

The toothing is configured to facilitate production of the gear by moulding techniques and is such that the moulding i.e. the gear itself or a green compact thereof, in the case when the gear is moulded using metal powder technology — can be removed from the mould by simple relative axial movement therebetween. As shown, the toothing 2 extends from one transverse face 3 of the gear to the other transverse face 4. The pitch diameter illustrated by the dotted line 5 in Figure 1 is greatest adjacent the face 3 and never increases along the path of the tooth to the other face. More specifically, the toothing is divided into two axial portions 6, 7 of roughly equal length. In the first portion 6 the toothing has a partial throat in which the pitch diameter decreases arcuately away from the face 3. This portion of the toothing is similar to one axial half of conventional wormwheel toothing having a throat of a radius to match that of the pitch circle of the worm to ensure line contact between worm and wheel in use. Conventionally wormwheel toothing is helical and has a helical angle equal to the lead angle of the worm. Likewise the portion 6 may have a helical angle which is a shallow angle of say 5° or less to permit removal from the mould without the need for relative rotation between the moulding and the mould.

The toothing over portion 7 is straight like a spur gear and has no variation in its pitch diameter along its axial length and no helical angle. There is a transition portion between portions 6 and 7 in which they merge smoothly together without discontinuity.

As will be appreciated, over the portion 7 the toothing must be both straight and of non-increasing pitch diameter to enable the moulding to be removed from the mould. A constant pitch diameter as illustrated is preferred for portion 7 but it will be appreciated that the pitch diameter may decrease somewhat, since the portion 7 of the toothing does not transmit drive throughout its length.

The provision of the straight teeth over portion 7 of the toothing strengthens the toothing making it suitable for transmitting high torques, for example in applications such as in valve actuators where the torque required is high and up to, for example, 3500 lb in. (396 NM).

The worm is made of a harder material than the wormwheel gear so that during use the toothing extending over portion 7 wears into a throat so that the amount of contact between the worm and wormwheel gear gradually increases as wear takes place. For example, the wormwheel gear may be formed from sintered iron and the worm made of carbon steel.

The wormwheel gear 1 has an axial opening 8 provided with internal splines 9. On face 4 a bearing 10 is formed for supporting the wormwheel gear 1.

A method of cutting a pattern or master wormwheel gear 100 from which a mould can be made is illustrated in Figure 3. The technique of hobbing is used. A hob 11 corresponding to the worm to be used with the wheel rotates in the direction of arrow 12 in mesh with the gradually forming toothing 2 of the master wormwheel gear 100 which is likewise rotating about its axis. The hob gradually moves along the direction of arrow A until the toothing 2 is cut to full depth. At this stage the toothing 2 has a full throat the pitch diameter increasing either side of the axis of approach A. In order to produce the straight portion 7 of the toothing 2, the hob is then moved axially of the master wormwheel gear 100 in the direction of arrow B whilst the relative rotation of hob and master wormwheel gear 100 is maintained. It will be appreciated that a tapered hob which initially approaches the wormwheel blank tangentially may also be used to form the master wormwheel gear. The final step being completed by the same axial movement of the hob and wormwheel.

Once a master wormwheel gear 100 has been formed to the required tolerance it can be used to form a re-usable mould by any known technique, for example spark erosion. The mould so formed is then used in a moulding process to form mouldings, which may be either gears or green compacts as explained above, and can be readily and automatically ejected from the tooling without relative rotation between the mould and moulding.

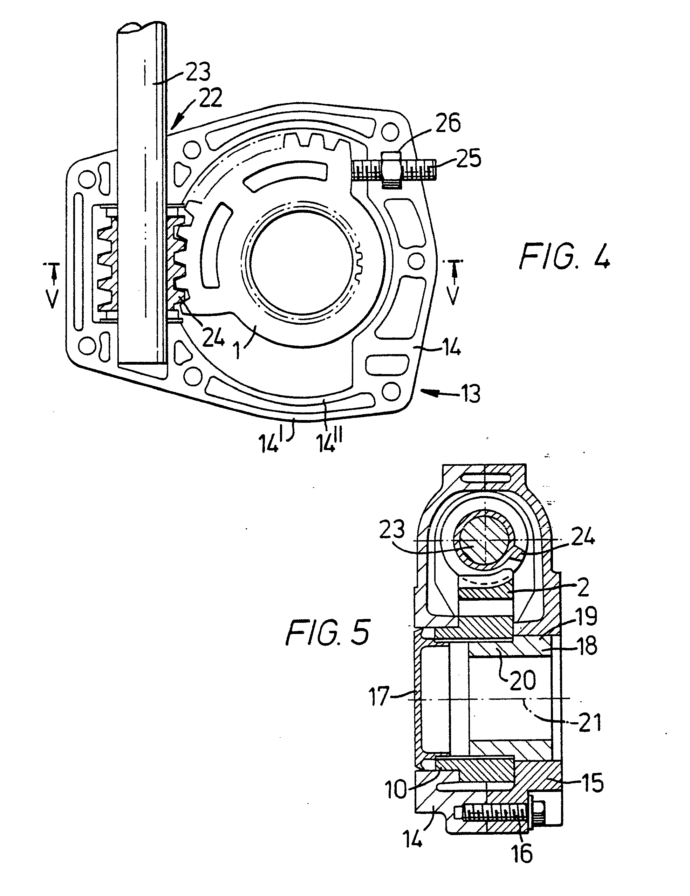

Figures 4 and 5 illustrate an application of wormwheel gears produced as described above. A valve actuator 13 comprises a housing 13 having an upper casing section 14, and a lower casing section 15 secured together by fastening means such as the bolt 16. The housing may be cast in aluminium and preferably has multiple wall sections. Here double walls are shown with sections such as 14' and 14". The provision of multiple walling gives increased strength to the casing on account of the number of exposed wall surfaces produced in the casting process. The wormwheel gear 1 is located in the housing with its integral bearing 10 positioned in an opening in casing section 14. The opening in the casing 14 is sealed with a cap 17 which seals into opening 8 and cooperates with the splines 9. A bearing sleeve 18 has a portion 19 adapted to form a second bearing for the wormwheel gear 1. The second bearing is mounted in an opening in casing section 15. The bearing sleeve 18 also has an externally splined portion which is received in opening 8. The spines of portion 20 cooperate with splines 9 to prevent relative rotation of the sleeve 18 and the wormwheel gear. The sleeve 18 has a central axial opening 21 sized to receive the valve stem of the valve to be associated with the actuator. The interior of opening 21 may be provided with lugs or keyways or other means by which the valve stem may be mounted thereto. As the same size of actuator may be used with a variety of valves, it is possible to provide a range of bearing sleeves 18 all capable of fitting into the opening 8 of wormwheel gear 1 but having differently sized openings 21 to accept the different valve stems. Thus the bearing sleeve serves the dual purpose of providing the second bearing for the wormwheel and acting as an adaptor to the valve stem thus reducing the number of parts necessary to assemble a range of actuators for various different valves.

The housing 13 also accommodates the worm 22 having a shaft 23 which extends outside the housing and may be provided with a suitable handle (not shown) for manually rotating it. A worm thread 24 is turned on the shaft 23 and engages with teeth 2 of wormwheel gear 1 such that rotation of the shaft about its axis causes rotation of the wormwheel gear 1 about its axis and thereby rotation of a valve stem (not shown) fitted in opening 21 in the bearing sleeve 18. The valve stem is connected to a butterfly valve vane which it is only necessary to rotate through 90° between its open and closed positions. The actuator is shown in a position wherein the valve would be in a closed position. A shoulder of the wormwheel gear abuts against a stop bolt 25 fixed in the housing. The stop bolt may be rotated to move it axially so as to make fine adjustments of the stop position of the wormwheel gear and thus the exact position of the butterfly vane in its valve seating in the closed position. The stop bolt is mounted between the two casing sections and passes through a nut 26 accommodated in cooperating recesses in the two sections 14 and 15. Thus it is not necessary for the bore in the aluminium casing in which the bolt is received to be threaded.

## Claims

1. A worm and wormwheel, the wormwheel having teeth (2) disposed about at least a portion of its periphery, the teeth (2) having a decreasing pitch diameter over a first axial portion (6) thereof extending from one transverse face (3) of the wheel (1) and having a non-increasing pitch diameter over a second axial portion (7) thereof extending to the other transverse face (4) of the wheel (1), characterised in that the wormwheel (1) is of moulded sintered metal the second axial portion (7) of each tooth (2) is straight with no helical angle and the worm (22) is of a harder material than the wormwheel (1), so that in use the straight portions (7) of the teeth (2) will wear to increase the contact between the teeth of the worm and wormwheel.

2. A worm and wormwheel as claimed in claim 1, wherein said teeth (2) have a constant pitch diameter over said second axial portion (7).

3. A worm and wormwheel as claimed in claim 2, wherein the pitch diameter decreases arcuately over the first axial portion (6) of the teeth (2) to a value equal to said constant pitch diameter of the second axial portion (7).

4. A worm and wormwheel as claimed in claim 1, 2 or 3, wherein the teeth (2) are helical over said first axial portion (6).

5. A worm and wormwheel as claimed in any one of the preceding claims, wherein the wormwheel (1) is formed using metal powder which is compressed in a mould to form a green compact which is removed from the mould and thereafter sintered.

## Patentansprüche

1. Schnecke und Schneckenrad, wobei das Schneckenrad Zähne (2) aufweist, die entlang wenigstens eines Teils seines Umfangs angeordnet sind und die Zähne (2) einen abnehmenden Flankendurchmesser entlang eines ersten axialen Abschnitts (6) aufweisen, der sich von einer Querfläche (3) des Rades (1) aus wegerstreckt und einen nicht zunehmenden Flankendurchmesser entlang eines zweiten axialen Abschnitts (7) aufweisen, der sich bis zur zweiten Querfläche (4) des Rades (1) erstreckt, dadurch gekennzeichnet, daß das Schneckenrad aus gegossenem Sintermetall besteht, daß der zweite axiale Abschnitt (7) eines jeden Zahnes geradlinig ist ohne Spiralwinkel und daß die Schnecke (22) aus härterem Material als das Schneckenrad (1) besteht, so daß während des Gebrauchs der geradlinige Abschnitt (7) der Zähne (2) abgenutzt wird um so den Kontakt zwischen den Zähnen der Schnecke und dem Schneckenrad zu verbessern.

2. Schnecke und Schneckenrad nach Anspruch 1, bei denen der Flankendurchmesser des zweiten axialen Abschnitts (7) der Zähne (2) konstant ist.

3. Schnecke und Schneckenrad nach Anspruch 2, bei denen der Flankendurchmesser entlang des ersten axialen Abschnitts (6) der Zähne (7) bogenförmig abnimmt bis zu einem Wert, der gleich dem konstanten Flankendurchmesser des zweiten axialen Abschnitts (7) ist.

4. Schnecke und Schneckenrad nach Ansprüchen 1, 2 oder 3, bei denen die Zähne (2) entlang des ersten axialen Abschnitts (6) schraubenförmig sind.

5. Schnecke und Schneckenrad nach einem der vorhergehenden Ansprüche, bei denen das Schneckenrad durch Verwendung eines Metallpulvers gebildet ist, das in einer Gießform komprimiert wird um einen Rohling zu bilden, der aus der Form genommen und anschließend gesintert ist.

## Revendications

1. Vis sans fin et roue pour vis sans fin, la roue pour vis sans fin (1) ayant des dents (2) disposées sur au moins une partie de sa périphérie, lesdites dents ayant un diamètre primitif décroissant dans une première partie axiale (6) de leur longueur, cette première partie axiale s'étendant à partir d'une face transversale (3) de ladite roue pour vis sans fin, et ayant un diamètre primitif non croissant dans une seconde partie axiale (7) de leur longueur, cette seconde partie axiale s'étendant jusqu'à l'autre face transversale (4) de la roue, caractérisées en ce que la roue pour vis sans fin (1) est fabriquée en métal fritté, que la seconde partie axiale (7) de chaque dent (2) est droite et sans angle d'hélice et que la vis sans fin (22) est constituée d'un matériau plus dur que celui de ladite roue, de sorte qu'en service les parties droites (7) des dents (2) s'usent pour augmenter la surface de contact entre les filets de la vis sans fin (22) et les dents de la roue pour vis sans fin (1).

2. Vis sans fin et roue pour vis sans fin selon la revendication 1, caractérisées en ce que les dents (2) ont un diamètre primitif constant dans la seconde partie (7) de leur longueur.

3. Vis sans fin et roue pour vis sans fin selon la revendication 2, caractérisées en ce que le diamètre primitif décroît dans la première partie axiale (6) de la longueur des dents (2) jusqu'à une valeur égale au diamètre primitif constant de la seconde partie axiale (7), le lieu géométrique des diamètres primitifs successifs dans ladite première partie axiale formant un arc de circonférence.

4. Vis sans fin et roue pour vis sans fin selon l'une des revendications précédentes, caractérisées en ce que les dents (2) sont hélicoïdales dans la partie axiale (6) de leur longueur.

5. Vis sans fin et roue pour vis sans fin selon l'une des revendications précédentes, caractérisées en ce que la roue pour vis sans fin (1) est fabriquée avec de la poudre métallique comprimée dans un moule pour former une "pièce comprimée" qui est ensuite sortie du moule, puis frittée.

FIG.1

FIG. 2

FIG. 3

FIG. 4

FIG. 5

2